(19) Europäisches Patentamt / European Patent Office / Office européen des brevets

(11) **EP 3 203 198 B1**

## (12) FASCICULE DE BREVET EUROPEEN

(45) Date de publication et mention
de la délivrance du brevet:
**18.04.2018 Bulletin 2018/16**

(51) Int Cl.:
**G01F 23/26** *(2006.01)*    **G01F 23/24** *(2006.01)*
**G08B 21/20** *(2006.01)*    *G01K 7/18* *(2006.01)*

(21) Numéro de dépôt: **17150880.7**

(22) Date de dépôt: **10.01.2017**

(54) **DETECTEUR D'IMMERSION ET AERONEF**

TAUCHDETEKTOR UND LUFTFAHRZEUG

AN IMMERSION DETECTOR AND AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.02.2016 FR 1600191**

(43) Date de publication de la demande:
**09.08.2017 Bulletin 2017/32**

(73) Titulaire: **Airbus Helicopters
13725 Marignane Cedex (FR)**

(72) Inventeurs:
• **RAGUENES, Gwénaël
13960 SAUSSET LES PINS (FR)**

• **GUTTIN-LOMBARD, Perry
31300 TOULOUSE (FR)**
• **BAILLEUL, Georges
31530 MONTAIGUT/SAVE (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
EP-A1- 2 733 066      DE-A1-102008 044 232
US-A- 5 201 223        US-A- 6 078 729
US-A1- 2011 110 792

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

La présente invention concerne un détecteur d'immersion et un aéronef muni d'un tel détecteur d'immersion.

Un détecteur d'immersion a pour fonction de détecter la présence d'eau dans un espace. Sur un aéronef, un détecteur d'immersion est notamment utilisé dans le cadre d'un amerrissage.

Ainsi, un détecteur d'immersion peut être associé à un système de flottabilité muni de flotteurs gonflables. Lorsqu'au moins un détecteur d'immersion détecte la présence d'eau dans un espace de détection de l'aéronef tel qu'une case de train par exemple, ce détecteur d'immersion transmet un signal à une unité de traitement pour ordonner le gonflage des flotteurs. En parallèle, le détecteur d'immersion peut transmettre un signal à une balise de détresse, un enregistreur de données, un système d'éclairage de secours...

Les conditions d'amerrissage étant par nature imprévisibles, le détecteur d'immersion doit être capable de détecter une immersion indépendamment de la direction de progression de l'eau dans l'espace de détection. Par suite, le détecteur d'immersion doit être omnidirectionnel.

En outre, le détecteur d'immersion doit être capable d'identifier rapidement et avec une bonne probabilité la présence indue d'eau dans un espace de détection.

Dans ce contexte, un détecteur d'immersion connu comporte un flotteur qui est mobile au sein d'un carter. En présence d'eau, le flotteur se déplace, ce déplacement induisant l'émission d'un signal de détection d'une immersion.

Certains détecteurs d'immersion à flotteur ne permettent pas de respecter des contraintes dimensionnelles strictes et/ou des contraintes de détection omnidirectionnelle.

Un autre détecteur d'immersion connu comporte un capteur de pression. Ce détecteur d'immersion détecte une immersion lorsqu'une pression de mesure est supérieure à un seuil. Bien qu'efficace, ce type de détecteur risque de détecter une immersion tardivement, à savoir lorsque le détecteur est profondément immergé.

Un autre détecteur d'immersion connu est de type optique. Un détecteur d'immersion optique est soumis aux risques de générer des erreurs de détection en présence de pluie et de condensation.

Un autre détecteur d'immersion connu est de type thermorésistif. Un détecteur d'immersion thermorésistif comporte deux sondes de température ainsi qu'une unité de mesure et de contrôle électronique. En étant alimentées électriquement par l'unité de mesure et de contrôle électronique, les sondes de température s'échauffent.

Dès lors, les deux sondes de température sont alimentées électriquement avec des courants électriques présentant des intensités différentes. Ces courants électriques tendent à provoquer un auto-échauffement différemment des sondes de température. Lorsque les sondes de température sont à l'air libre, les deux sondes de température présentent alors des températures très différentes en raison de ces courants électriques différents. Par contre, lorsque les sondes de température sont plongées dans l'eau, ces sondes de température présentent des températures proches en raison de l'inertie thermique de l'eau. A titre illustratif, deux sondes de température peuvent présenter un écart de températures de 20 degrés Celsius en étant plongées dans l'air, et un écart de températures de 8 degrés Celsius en étant plongées dans l'eau.

Lorsque l'unité de mesure et de contrôle électronique du détecteur d'immersion détecte un écart de températures relativement faible entre les deux sondes de température, cette unité de mesure et de contrôle électronique peut en déduire que les sondes de température sont plongées dans un liquide.

Bien qu'efficace, un tel détecteur d'immersion peut générer des alarmes indues lorsque les sondes de température sont impactées par un flux d'air. Le flux d'air peut en effet tendre à refroidir les sondes de température, et donc à minimiser l'écart de températures existant entre les sondes de température. A titre illustratif, les sondes de température peuvent avoir un comportement similaire dans l'eau et sous l'effet d'un flux d'air se déplaçant à une vitesse de l'ordre de 50 kilomètres par heure.

En outre, une sonde de température peut posséder un temps de réponse relativement lent. Dès lors, la détection d'une immersion peut être détectée à l'issue d'une durée relativement importante, ce qui peut un poser problème suite à un amerrissage.

L'utilisation d'un tel détecteur d'immersion sur un aéronef peut alors être problématique.

Par ailleurs, un autre détecteur d'immersion connu est un détecteur de type capacitif.

Un détecteur d'immersion capacitif comporte un condensateur muni d'au moins une armature métallique. Une immersion est alors détectée par la mesure fréquentielle proportionnelle à la capacité électrique du détecteur d'immersion capacitif. En présence d'un liquide, la constante diélectrique du condensateur et donc sa capacité électrique varient. Si la capacité électrique varie sensiblement, le détecteur d'immersion peut transmettre un signal pour signaler une immersion.

Si le fluide à observer est un fluide isolant électriquement, le détecteur d'immersion capacitif comporte deux armatures métalliques séparées l'un de l'autre par un espace pour former un condensateur. Lorsque cet espace se remplit de fluide, la capacité électrique du condensateur varie.

Si le fluide à observer est un fluide qui n'est pas isolant électriquement, le détecteur d'immersion capacitif comporte un conducteur métallique recouvert d'un isolant diélectrique. Lorsque l'espace se remplit du fluide alors la capacité électrique entre les deux armatures électriques varie significativement.

Un tel détecteur capacitif peut aussi permettre de mesurer la hauteur d'un liquide dans une enceinte. Le document FR 2580070 présente ainsi un dispositif capacitif utilisé comme une jauge de carburant.

L'utilisation d'un détecteur capacitif pour déterminer la présence d'une immersion est intéressante. Néanmoins, un tel détecteur peut être sensible à l'humidité. Une humidité importante peut ainsi générer une fausse alerte d'immersion, ce qui peut poser problème dans le cadre d'une application aéronautique.

Dès lors, la conception d'un détecteur d'immersion notamment destiné au domaine aéronautique s'avère délicate en raison des conditions d'utilisation de fait particulières de ce détecteur d'immersion. Un détecteur d'immersion d'un aéronef est notamment parfois agencé dans une zone débouchant sur l'extérieur de l'aéronef, telle qu'une case de train, pour détecter le plus rapidement possible un amerrissage. Un détecteur d'immersion d'un avion est alors soumis à des conditions environnementales délicates. Ainsi, un détecteur d'immersion d'aéronefs est soumis à un phénomène de condensation, à une forte humidité, à de fortes pluies et à des flux d'air susceptibles de générer des alertes de présence d'eau erronées.

Pour éviter de générer des alertes abusives d'immersion sur un aéronef, le nombre de détecteurs d'immersion peut être multiplié. Ces détecteurs d'immersion fournissent des données traitées par des techniques de filtrage et de vote pour élaborer une information de présence d'eau consolidée. Cette solution est intéressante.

Néanmoins, lorsque les détecteurs d'immersion sont identiques, une panne commune peut rendre tout le système inopérant. Un constructeur peut alors envisager d'utiliser des détecteurs d'immersion différents mais doit alors certifier plusieurs détecteurs d'immersion différents ce qui induit un coût financier à prendre en considération.

De plus, cette solution nécessite l'emploi d'une unité de filtrage des données relativement complexe.

Enfin, l'installation de plusieurs détecteurs d'immersion peut avoir un impact économique non négligeable et engendrer des difficultés d'intégration.

En outre, un aéronef peut imposer des contraintes dimensionnelles relativement strictes à un détecteur d'immersion. A titre illustratif, un détecteur d'immersion doit être relativement petit pour pouvoir être disposé dans une case de train d'atterrissage.

Les documents US6078729, US 5201223, EP 2733066, US 2011/110792 et DE 10 2008 044232 sont connus et éloignés de l'invention.

La présente invention a alors pour objet un détecteur d'immersion innovant visant à optimiser la détection d'une immersion du détecteur d'immersion dans un liquide.

Selon l'invention, un détecteur d'immersion est muni d'un détecteur thermorésistif comprenant au moins deux sondes de température saillant d'une base en s'étendant en élévation le long d'une direction en élévation, le détecteur thermorésistif comprenant une première unité de contrôle et de mesure reliée à chaque sonde de température, la première unité de contrôle et de mesure générant en fonction de la température de chaque sonde de température une première information d'immersion lorsque le détecteur thermorésistif est immergé dans un fluide.

Le détecteur d'immersion comporte un détecteur capacitif, le détecteur capacitif ayant un condensateur électrique muni d'au moins une armature métallique saillant de ladite base en s'étendant en élévation, le détecteur capacitif ayant une deuxième unité de contrôle et de mesure reliée au condensateur, la deuxième unité de contrôle et de mesure générant en fonction d'une capacité électrique du condensateur une deuxième information d'immersion lorsque le détecteur capacitif est immergé dans le fluide, le détecteur d'immersion ayant une unité de traitement en communication avec la première unité de contrôle et de mesure et la deuxième unité de contrôle et de mesure pour générer et émettre un signal de sortie signalant une immersion du détecteur d'immersion en présence de la première information d'immersion et de la deuxième information d'immersion, le détecteur d'immersion ayant un bouchon entourant les sondes de température et le condensateur, le bouchon comprenant des orifices mettant en communication fluidique les sondes de température et le condensateur avec un milieu extérieur enveloppant le détecteur d'immersion.

L'expression « unité de contrôle et de mesure » désigne une unité électronique apte à alimenter électriquement au moins un capteur et à traiter les mesures réalisées par ce capteur. Ainsi, la première unité de contrôle et de mesure alimente électriquement les sondes de température et traite les mesures effectuées par ces sondes de température. De même, la deuxième unité de contrôle et de mesure alimente électriquement le condensateur et traite les mesures effectuées grâce à ce condensateur.

L'expression « unité de traitement » désigne une unité électronique apte à alimenter électriquement les unités de contrôle et de mesure et à traiter les informations transmises par ces unités de contrôle et de mesure. De plus, l'unité de traitement peut réaliser des tests de fonctionnement du détecteur d'immersion. En outre, l'unité de traitement peut permettre de filtrer les impacts de foudre et les agressions électromagnétiques.

L'expression « information » fait référence à une donnée relative à une immersion, cette donnée prenant la forme d'un signal électrique, d'une valeur d'un paramètre...

Par suite, le détecteur d'immersion ne comporte pas un unique capteur mais deux capteurs différents qui coopèrent l'un avec l'autre.

Un premier capteur est un détecteur thermorésistif. Ce détecteur thermorésistif peut être un détecteur usuel muni de sondes de température connues sous la dénomination « PT100 » par exemple.

La première unité de contrôle et de mesure alimentent alors électriquement les sondes avec des courants électriques continus présentant des intensités différentes, par exemple respectivement égales à 1 milliampère et 20 milliampères. Les deux sondes de température s'échauffent différemment dans des conditions normales. Par suite, les deux sondes de température sont susceptibles de présenter des températures différentes induisant des tensions électriques différentes aux bornes des deux sondes de température.

La première unité de contrôle et de mesure peut alors évaluer la différence de température entre les deux sondes de température en mesurant la différence de potentiel électrique entre les deux sondes de température. La première unité de contrôle et de mesure détermine la différence de potentiel électrique, détermine la différence de température entre les deux sondes de température et en déduit notamment la présence d'un liquide en fonction de cette différence de température.

De plus, un deuxième capteur est un détecteur capacitif. Par exemple, le détecteur capacitif est un détecteur d'un type usuel muni d'un condensateur.

Ce condensateur peut comprendre une unique armature métallique et d'un isolant diélectrique agencé sur une face d'une autre armature métallique. L'ensemble forme alors un condensateur dont la constante diélectrique varie en fonction de la présence de fluide.

De manière alternative, le condensateur peut comprendre deux armatures métalliques sans isolant.

En outre, le détecteur capacitif comporte une deuxième unité de contrôle et de mesure reliée électriquement au condensateur.

La deuxième unité de contrôle et de mesure peut alors mesurer la capacité du condensateur par mesure fréquentielle, capacité dont la constante diélectrique est fonction du fluide en présence.

Dès lors, le détecteur capacitif et le détecteur thermorésistif sont portés par une base du détecteur d'immersion. Dès lors, les sondes de température et le condensateur saillent au moins partiellement en élévation de cette base.

Par ailleurs, le détecteur d'immersion est muni d'un bouchon enserrant les parties des sondes de température et du condensateur qui saillent de la base.

Le bouchon peut comprendre des organes de maintien pour maintenir en position les sondes de température et le condensateur. Par exemple, le bouchon comporte dans un espace creux une plaque munie de trois perforations traversées respectivement par les sondes de température et le condensateur.

Pour permettre le fonctionnement du détecteur thermorésistif, le bouchon comporte des orifices, notamment sur sa périphérie. En cas d'immersion du détecteur d'immersion dans un liquide, des orifices permettent alors à un liquide de pénétrer à l'intérieur du bouchon, et des orifices permettent d'évacuer concomitamment l'air présent dans le bouchon d'être évacué vers l'extérieur. Ces orifices permettent alors à un liquide d'atteindre les sondes de température et le condensateur lorsque le détecteur d'immersion est immergé.

La présence de liquide est alors détectée dans des conditions normales par le détecteur capacitif et le détecteur thermorésistif. Lorsque le détecteur capacitif et le détecteur thermorésistif signalent la présence d'un liquide, l'unité de traitement émet alors un signal d'alerte de présence d'un liquide, éventuellement vers un système de gonflage d'un flotteur, vers une balise de détresse...

De manière innovante, le détecteur d'immersion présente donc deux capteurs distincts. Par suite, le taux d'occurrence de fausses détections indues peut être minimisé.

En outre, l'unité de traitement peut tester le fonctionnement du détecteur d'immersion à la mise sous tension de l'aéronef. Si une panne du détecteur thermorésistif ou du détecteur capacitif est détectée, cette panne est signalée à un opérateur. Le détecteur d'immersion peut alors être remplacé avant le vol.

De plus, le détecteur d'immersion permet aussi de concilier deux exigences antagonistes.

En effet, le détecteur d'immersion peut posséder un temps de réponse faible dans le cas de présence d'eau malgré la présence d'un bouchon agencé autour des sondes de température et du condensateur La position et la taille des orifices du bouchon peuvent être optimisées afin que les sondes de température et le condensateur soient au contact de l'eau le plus vite possible indépendamment de la position dans l'espace du détecteur d'immersion. Les orifices peuvent aussi être dimensionnés pour réduire le risque d'obstruction de ces orifices dans un environnement poussiéreux.

Le détecteur d'immersion peut aussi être relativement insensible à des flux d'air. Le flux d'air rencontré naturellement sur un aéronef a un impact négatif sur le fonctionnement d'un détecteur thermorésistif. La présence d'orifices dans le bouchon semble dès lors contreproductive. Les dimensions des orifices peuvent cependant être minimisées afin d'atténuer la sensibilité au flux d'air. Dès lors, bien que percé par des orifices, le bouchon tend à protéger les sondes de température contre un impact avec le flux d'air, seul ou éventuellement en combinaison avec un capuchon détaillé par la suite.

Par ailleurs, le bouchon permet aussi de protéger mécaniquement les sondes de température et le condensateur contre un choc accidentel.

Le détecteur d'immersion selon l'invention permet en outre d'éviter toute panne commune sur sa partie détection dans la mesure où les deux détecteurs utilisés sont d'un type différent.

De plus, le détecteur d'immersion peut permettre de simplifier fortement l'installation en installant éventuellement un seul détecteur d'immersion par aéronef. Par sa double technologie et son électronique, l'utilisation d'un détecteur d'immersion tend à obtenir un taux d'occurrence faible de fausses détections. Les contraintes de sureté de fonctionnement imposées par des règlements de certification peuvent éventuellement être atteintes avec un seul détecteur d'immersion.

La double technologie de détection peut permettre en outre d'être insensible à toutes les grandeurs d'influence, à savoir un flux d'air, à la présence d'humidité....

Par ailleurs, ce détecteur d'immersion peut détecter une immersion dans de l'eau, mais peut facilement se décliner en d'autres types de détecteur.

Le détecteur d'immersion peut fonctionner en présence de tout fluide conducteur électriquement en adaptant la constante diélectrique du liquide mémorisée dans le détecteur d'immersion. Pour détecter un liquide particulier, la deuxième unité de contrôle et de mesure est adaptée pour tenir compte de la constante diélectrique de ce liquide particulier. Le détecteur d'immersion peut donc aussi détecter la présence de tout type de fluide (huile, glycol...).

Le détecteur d'immersion peut se transformer en détecteur thermorésistif seul par inhibition du détecteur capacitif, ou, à l'inverse, en détecteur capacitif seul en inhibant le détecteur thermorésistif. Pax exemple, l'unité de traitement peut traiter uniquement les données provenant du détecteur capacitif pour utiliser le détecteur d'immersion en un système capacitif, ou les données provenant du détecteur thermorésistif pour utiliser le détecteur d'immersion en un système thermorésistif.

Dans le cas d'une transformation en un système capacitif seul, le détecteur d'immersion devient ainsi un capteur de niveau. Le détecteur capacitif fournit alors une information proportionnelle au niveau de fluide dans le détecteur d'immersion.

Dans le cas d'une transformation en système thermorésistif, le détecteur d'immersion peut aussi devenir un capteur de température redondé. Les deux sondes de température sont ainsi utilisées en tant que capteurs de température. L'unité de traitement électronique peut alors faire de la comparaison, de la moyenne ou du vote entre les données des deux sondes de température afin de fournir une information de température consolidée et avec un niveau de fiabilité et de précision bien supérieurs à une seule sonde.

Dans le cas d'une transformation en un système thermorésistif seul, le détecteur d'immersion peut devenir ainsi un capteur de flux d'air en démontant le détecteur capacitif. Le flux d'air impactant les sondes de température permettra alors d'aligner les potentiels électriques et de détecter le flux d'air. L'intensité du flux d'air peut aussi être déterminé car directement proportionnelle aux écarts de potentiels électriques.

Le détecteur d'immersion peut aussi comporter une ou plusieurs des caractéristiques qui suivent.

Ainsi, la première unité de contrôle et de mesure peut déterminer un gradient qui est fonction de la variation d'un écart de températures entre les deux sondes de température pendant une durée de mesure et compare le gradient à un seuil, la première information d'immersion étant émise lorsque le gradient est supérieur au seuil.

Le gradient peut être un gradient d'un écart de températures en tant que tel, ou encore un gradient d'un écart de tensions entre les tensions régnant aux bornes des sondes de température. Par exemple, chaque sonde de température présente une tension électrique entre ces bornes. La première unité de contrôle et de mesure détermine alors une première tension électrique présente entre les bornes d'une première sonde de température et une deuxième tension électrique présente entre les bornes d'une deuxième sonde de température. La première unité de contrôle et de mesure déterminent ensuite une différence entre la première tension électrique et la deuxième tension électrique, le gradient étant égal à la variation de cette différence pendant une durée de mesure prédéterminée.

Le temps de réponse d'une sonde de température est éventuellement relativement long. Dès lors, cette variante propose de ne pas prendre en compte une température mais un gradient fonction des températures sondes de température.

Ce gradient est comparé à un seuil favorablement déterminé à l'aide de la relation suivante :

$$GTH = C1*DT+C2$$

où « GTH » représente ledit seuil, « DT » représente ladite durée de mesure, « C1 » et « C2 » représentent des constantes prédéterminées, « * » représente le signe de la multiplication, « + » représente le signe de l'addition.

La constante C1 est par exemple égale à -0.0875, et la constante C2 est par exemple égale à 0.75

Le seuil peut de plus être borné. Par exemple, le seuil est borné par une borne supérieure égale à 0.2. Cette borne supérieure amène une sécurité vis-à-vis d'éventuelles perturbations parasites.

Par ailleurs, la base peut loger la première unité de contrôle et de mesure.

Le détecteur capacitif comporte alors une base qui porte les deux sondes de température. La première unité de contrôle et de mesure est alors agencée dans cette base.

Le terme « base » désigne donc un carter portant les sondes de température et le condensateur, et dans lequel est agencée la première unité de contrôle et de mesure.

De plus, la base peut aussi loger l'unité de traitement, voire la deuxième unité de contrôle et de mesure.

L'unité de traitement et/ou la première unité de contrôle et de mesure et/ou la deuxième unité de contrôle et de mesure peuvent former une même unité électronique. Chaque unité peut par exemple prendre la forme d'un segment d'un programme mémorisé et exécuté par un processeur ou encore d'une partie d'un circuit électronique.

Par ailleurs, l'unité de traitement peut comporter un dispositif d'alimentation électrique et un microcontrôleur, le dispositif d'alimentation électrique étant destiné à être relié à un circuit électrique extérieur au détecteur d'immersion, le microcontrôleur étant relié à la première unité de contrôle et de mesure et à la deuxième unité de contrôle et de mesure.

Le dispositif d'alimentation électrique est éventuellement capable de générer un courant électrique présentant une tension électrique de 3,3 volts à partir d'un courant électrique ayant une tension de 28 volts. Ce dispositif d'alimentation électrique peut aussi filtrer les conséquences d'un impact de foudre ou d'agressions électromagnétiques.

Le microcontrôleur communique avec les unités de contrôle et de mesure pour contrôler les états des détecteurs capacitif et thermorésistif en analysant les données transmises par la première unité de contrôle et de mesure ainsi que par la deuxième unité de contrôle et de mesure.

Un filtrage temporel des données reçues par l'unité de traitement peut être réalisé par le microcontrôleur pour détecter plus ou moins rapidement une immersion. Ce filtrage permet aussi d'effectuer une détection d'immersion permanente ou transitoire. Dans le cas d'un filtrage temporel fort, le microcontrôleur est réglé pour détecter une présence permanente de liquide. A l'inverse, dans le cas d'un filtrage temporel faible, le microcontrôleur est réglé pour détecter une présence permanente ou transitoire d'eau.

Le microcontrôleur permet aussi de diagnostiquer l'état du détecteur thermorésistif et l'état du détecteur capacitif au travers d'une fonction d'autotest.

A la mise sous tension du détecteur d'immersion, le microcontrôleur peut solliciter le détecteur thermorésistif en l'alimentant électriquement avec un courant électrique particulier, et vérifie que l'information transmise par le détecteur thermorésistif correspond à une information mémorisée. Cette opération peut aussi être réalisée avec le détecteur capacitif.

Selon un autre aspect, les orifices sont ménagés dans au moins deux zones du bouchon distinctes et décalées en élévation.

Le terme « zone » désigne un pourtour du bouchon s'étendant en élévation sur une longueur restreinte inférieure à la longueur totale d'extension du bouchon.

Les orifices d'une zone représentent par exemple des orifices d'entrée permettant à un liquide de pénétrer dans le détecteur d'immersion, alors que les orifices de l'autre zone représentent des orifices permettant d'évacuer l'air au fur et à mesure du remplissage de l'espace interne du détecteur d'immersion.

En outre, le bouchon comporte éventuellement une paroi latérale délimitant latéralement un espace interne en s'étendant en élévation d'un pied vers un sommet. Dès lors, le bouchon comporte une paroi supérieure obturant le sommet, les sondes de température et ledit condensateur étant au moins partiellement agencés dans cet espace.

Par conséquent, au moins un orifice supérieur peut être ménagé dans la paroi supérieure et au moins un orifice inférieur peut être ménagé dans la paroi inférieure.

De plus, le bouchon peut entourer au moins partiellement la base pour isoler le contenu de cette base de l'extérieur.

Selon un autre aspect, le détecteur d'immersion peut comporter un capuchon entourant au moins partiellement le bouchon, le capuchon comportant une cloison latérale délimitant latéralement un volume interne en s'étendant en élévation d'une assise vers une tête, ledit capuchon ayant une cloison supérieure obturant ladite tête, le bouchon étant au moins partiellement agencé dans ledit volume.

Le détecteur d'immersion comporte alors deux ensembles. Un ensemble de détection est constitué des parties sensibles et de l'électronique, à savoir du détecteur capacitif et du détecteur thermorésistif. Un autre ensemble est représenté par le bouchon et le cas échéant le capuchon.

Ce capuchon permet d'optimiser le fonctionnement du détecteur d'immersion en présence d'un flux d'air.

Dès lors, l'assise du capuchon est éventuellement vissée à un pied du bouchon.

De plus, au moins une ouverture supérieure est ménagée dans la cloison supérieure, et au moins une ouverture latérale est ménagée dans la cloison latérale.

Les ouvertures permettent à un fluide de rejoindre les sondes de température et le condensateur en passant par les orifices de du bouchon.

Eventuellement, aucune ouverture du capuchon ne débouche sur un orifice du bouchon.

Le terme « débouche » signifie qu'aucune ouverture n'est en regard d'un orifice selon une direction transverse perpendiculaire à un axe en élévation du détecteur d'immersion. Par suite, chaque orifice est décalé par rapport à une ouverture.

Par suite, la géométrie du capuchon ainsi que la localisation et les dimensions des ouvertures du capuchon et des orifices du bouchon permettent de « casser » un éventuel flux d'air susceptible de perturber les sondes de température, tout en ayant un impact minimisé sur le temps de réponse du détecteur d'immersion suite à un immersion dans un liquide.

Outre un détecteur d'immersion, l'invention vise un aéronef muni d'au moins un détecteur d'immersion selon l'invention, voire d'un unique détecteur d'immersion selon l'invention.

En effet, le détecteur d'immersion peut présenter un taux d'occurrence de détections indues faible pouvant rendre l'utilisation d'un autre détecteur inutile.

Eventuellement, l'aéronef s'étendant transversalement d'un coté droit vers un coté gauche de part et d'autre d'un plan antéropostérieur de symétrie, l'aéronef s'étendant longitudinalement d'un coté avant vers un coté arrière de part et d'autre d'un plan médian de symétrie orthogonal au plan antéropostérieur, l'aéronef est muni d'au moins deux détecteurs d'immersion disposés respectivement du coté avant et du coté arrière de l'aéronef ou du coté gauche et du coté droit de l'aéronef.

Deux détecteurs d'immersion sont par exemple utilisés non pas en raison des taux d'occurrence de pannes de chaque détecteur d'immersion, mais pour optimiser la détection en fonction de la manière dont se déroule l'amerrissage.

Par exemple, un aéronef peut amerrir en posant en premier lieu le côté avant ou le côté arrière de l'aéronef sur l'eau. En agençant un détecteur d'immersion du côté avant et un autre détecteur d'immersion du côté arrière, le système peut présenter un temps de détection intéressant quelle que soit la manière dont l'aéronef amerrit.

L'invention vise de plus un procédé de détection d'immersion avec un détecteur d'immersion selon l'invention, au cours duquel :

- la première unité de contrôle et de mesure génère une première information d'immersion lorsque ledit détecteur thermorésistif est immergé dans un fluide en fonction d'une température de chaque sonde de température,

- la deuxième unité de contrôle et de mesure génère une deuxième information d'immersion lorsque ledit détecteur capacitif est immergé dans ledit fluide en fonction d'une capacité électrique dudit condensateur,

- l'unité de traitement génère et émet un signal de sortie signalant une immersion dudit détecteur d'immersion en présence de la première information d'immersion et de la deuxième information d'immersion.

Eventuellement, la première unité de contrôle et de mesure détermine un gradient qui est fonction de la variation d'un écart de températures entre les deux sondes de température pendant une durée de mesure, et compare le gradient à un seuil, la première information d'immersion étant émise lorsque le gradient est supérieur au seuil.

Ce seuil peut être déterminé à l'aide de la relation suivante :

$$GTH = C1*DT+C2$$

où « GTH » représente ledit seuil, « DT » représente ladite durée de mesure, « C1 » et « C2 » représentent des constantes prédéterminées, « * » représente le signe de la multiplication, « + » représente le signe de l'addition.

L'invention et ses avantages apparaîtront avec plus de détails dans le cadre de la description qui suit avec des exemples donnés à titre illustratif en référence aux figures annexées qui représentent :

- la figure 1, une vue d'un aéronef selon l'invention,

- les figures 2 et 3, deux vues d'un détecteur d'immersion selon l'invention muni d'un détecteur capacitif et d'une détecteur thermorésistif,

- la figure 4, un schéma présentant des organes électroniques du détecteur d'immersion et illustrant le procédé de l'invention, et

- les figures 5 à 7, des vues du détecteur d'immersion des figures 2 et 3 équipé d'un capuchon.

Les éléments présents dans plusieurs figures distinctes sont affectés d'une seule et même référence.
On note que trois directions X, Y et Z orthogonales les unes par rapport aux autres sont représentées sur certaines figures.
La direction Z est dite en élévation ». L'expression « en élévation » est alors relative à cette direction d'élévation.
La direction X et la direction Y sont dites transversale. Le terme « transversal » est relatif une direction orthogonal à la direction en élévation Z.
Cet aéronef 1 comprend une cellule 2 s'étendant longitudinalement d'une extrémité avant 3 vers une extrémité arrière 4 le long d'un plan antéropostérieur P1 de symétrie. De plus, la cellule 2 s'étend transversalement d'un côté gauche 5 vers un côté droit 6 de part et d'autre du plan antéropostérieur, et en élévation d'une partie inférieure 7 vers une partie supérieure 8.
Le plan antéropostérieur P1 sépare alors transversalement un coté gauche et un côté droit de l'aéronef. En outre, un plan médian sépare alors longitudinalement un coté avant et un côté arrière de l'aéronef. Par exemple, le côté arrière et le côté avant présentent des longueurs égales.
La partie inférieure 7 comporte un fond de la cellule alors que la partie supérieure 8 comporte le sommet de la cellule. La partie inférieure 7 est classiquement munie d'un atterrisseur 10. Cet atterrisseur 10 possède par exemple plusieurs trains d'atterrissage 11. Chaque train d'atterrissage représenté est logé au moins partiellement dans une case de train 12.
Par exemple un train d'atterrissage avant est situé du côté avant de l'aéronef. Deux trains d'atterrissage arrière sont situés du côté arrière de l'aéronef, par exemple respectivement du côté gauche et du côté droit.
La partie supérieure 8 peut porter un rotor 9 participant à la sustentation voire à la propulsion de l'aéronef. La partie inférieure 7 peut inclure une barque délimitée notamment par le plancher d'un espace interne et l'enveloppe extérieure de la cellule.
La partie supérieure peut donc porter un rotor 9 dans le cadre d'un giravion. Ce rotor 9 est mis en rotation par au moins un moteur 110 au travers d'une boîte de transmission de puissance 120. Ce moteur 110 peut être un turbomoteur muni d'une turbine de détente solidaire d'un arbre de travail, l'arbre de travail étant relié par une chaîne mécanique à la boîte de transmission de puissance 120.

La partie inférieure 7 peut alors représenter la moitié inférieure de la cellule 2 alors que la partie supérieure 8 représente la moitié supérieure de cette cellule 2.

Par ailleurs, cet aéronef 1 est par exemple pourvu d'un système de flottabilité non représenté afin de pouvoir amerrir et/ou d'une balise de détresse.

En outre, cet aéronef 1 comporte au moins un détecteur d'immersion 20, et éventuellement un unique détecteur d'immersion 20.

Ce détecteur d'immersion 20 peut être relié à un équipement annexe, tel qu'un système de flottabilité et/ ou une balise de détresse et/ou un système de signalement d'alerte. Un tel système de signalement d'alerte comporte par exemple un moyen d'alerte visuelle et/ou sonore et/ou haptique.

Le détecteur d'immersion est à titre illustratif agencé dans une case de train 12. Néanmoins, le détecteur d'immersion peut être agencé dans des endroits différents, par exemple dans une cabine, dans une soute, dans un espace sous plancher...

Selon une variante, deux détecteurs d'immersion sont agencés dans l'aéronef, par exemple dans deux cases de train.

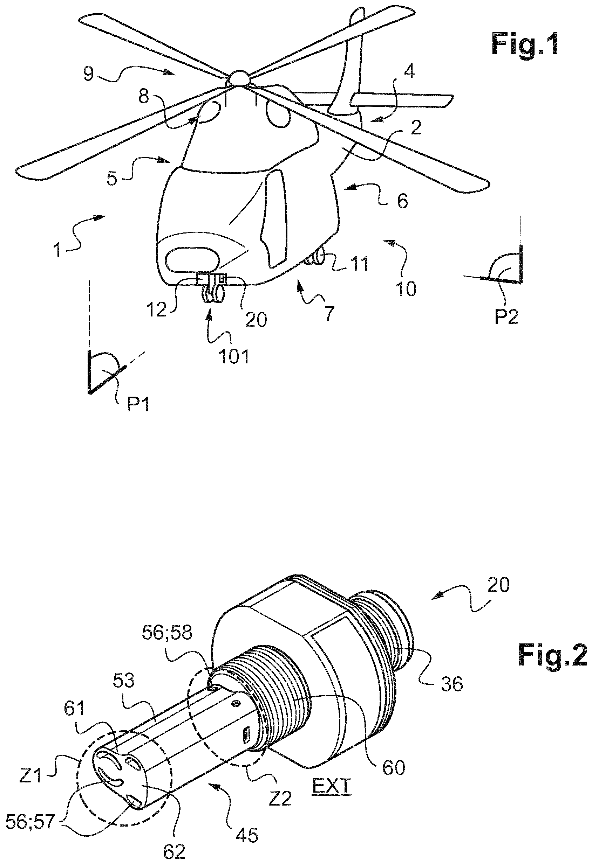

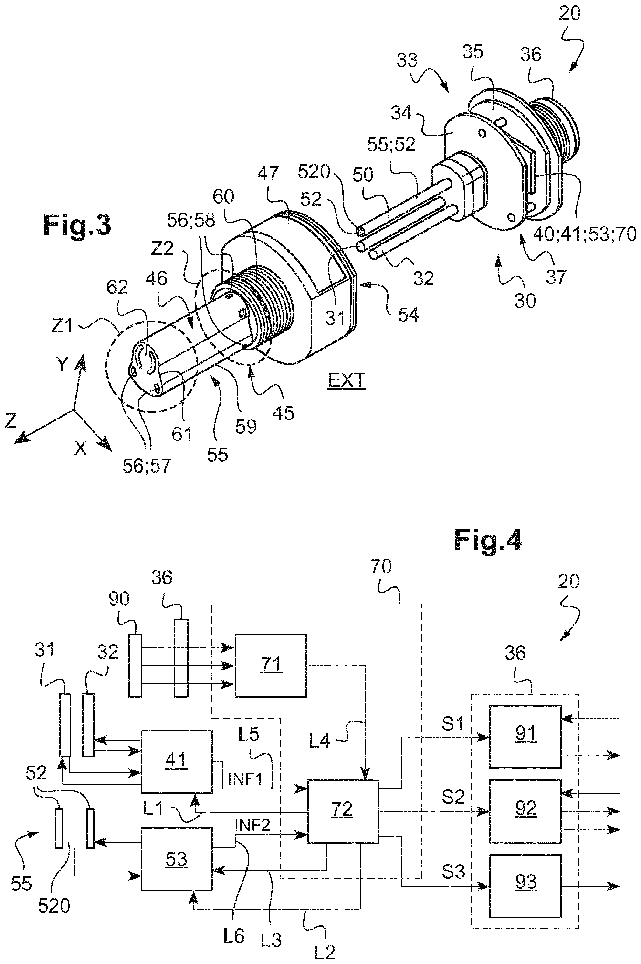

Les figures 2 à 3 illustrent un détecteur d'immersion 20. En particulier, la figure 3 présente un vue éclatée du détecteur d'immersion 20 de la figure 2.

En référence à la figure 3, le détecteur d'immersion 20 comporte un détecteur thermorésistif 30.

Un tel détecteur thermorésistif 30 est muni d'au moins deux sondes de température 31, 32 qui s'étendent en élévation le long d'une direction en élévation Z à partir d'une base 33.

Chaque sonde de température peut être une sonde de type PT100 reliée à une première unité de contrôle et de mesure 41. La première unité de contrôle et de mesure 41 possède par exemple un processeur, un circuit intégré, un système programmable, un circuit logique, ces exemples ne limitant pas la portée de l'expression « première unité de contrôle et de mesure ».

La première unité de contrôle et de mesure 41 est agencée dans la base 33.

Par exemple, la base 33 comporte une plaque supérieure 34 portant les sondes de température 31, 32 et une plaque inférieure 35. La plaque inférieure 35 est décalée axialement en élévation par rapport à la plaque supérieure 34. Dès lors, la plaque inférieure 35 et la plaque supérieure 34 délimitent axialement en élévation un espace dit « espace de mesure 37 » par commodité. Cet espace de mesure est occupé au moins partiellement par la première unité de contrôle et de mesure 41

Cette première unité de contrôle et de mesure 41 peut être une unité usuelle d'un détecteur thermorésistif connu. Dès lors, la première unité de contrôle et de mesure 41 génère, en fonction d'une température de chaque sonde de température 31, 32, une première information d'immersion lorsque les sondes de température sont au moins partiellement immergées dans un fluide. En particulier, ce fluide est par exemple de l'eau de mer. Cette première information peut prendre la forme d'une valeur d'un signal discret par exemple. A titre illustratif, le signal discret prend une valeur nulle en l'absence d'immersion et la valeur 1 si une immersion est détectée.

Par ailleurs, le détecteur d'immersion 20 comporte un détecteur capacitif 50.

Le détecteur capacitif 50 présente de manière usuelle un condensateur 55 électrique. Ce condensateur 55 est muni d'au moins une armature métallique 52 délimitant un espace ouvert 520 de détection. Cet espace ouvert est qualifié de « ouvert » dans la mesure où l'espace ouvert est en communication fluidique avec un milieu extérieur situé à l'extérieur du dispositif d'immersion.

Dès lors, le condensateur 55 est porté par la base 33. Par exemple, le condensateur s'étend en dehors de la base en élévation sensiblement parallèlement aux sondes de température 31, 32.

En outre, le détecteur capacitif 50 comporte une deuxième unité de contrôle et de mesure 53 reliée au condensateur 55. La deuxième unité de contrôle et de mesure 53 possède par exemple un processeur, un circuit intégré, un système programmable, un circuit logique, ces exemples ne limitant pas la portée de l'expression « deuxième unité de contrôle et de mesure ».

La deuxième unité de contrôle et de mesure peut être agencée dans l'espace de mesure 37.

Par exemple, une partie d'une carte électronique comporte un premier circuit électronique matérialisant la première unité de contrôle et de mesure, et un deuxième circuit électronique matérialisant la deuxième unité de contrôle et de mesure.

La deuxième unité de contrôle et de mesure peut prendre une forme connue. Ainsi, la deuxième unité de contrôle et de mesure 53 peut générer, en fonction d'une capacité électrique du condensateur 55, une deuxième information d'immersion lorsque le détecteur capacitif 50 est au moins partiellement immergé dans le fluide. Cette deuxième information peut prendre la forme d'une valeur d'un signal discret par exemple. A titre illustratif, le signal discret prend une valeur nulle en l'absence d'immersion et la valeur 1 si une immersion est détectée.

Par ailleurs, un bouchon 45 protège les sondes de température 31, 32 et le condensateur 55. Le bouchon 45 est creux et délimite un espace interne 54. Les sondes de température 31, 32 et le condensateur 55 sont alors logés dans cet espace interne 54.

A cet effet, le bouchon 45 comporte une paroi latérale 59 métallique délimitant latéralement l'espace interne 54. Cette paroi latérale peut comprendre une surface fermée sur elle-même, et notamment peut être une paroi latérale 59 cylindrique. Le terme cylindrique indique que la paroi latérale peut être obtenue à l'aide d'une génératrice déplacée sur une ligne fermée.

Cette paroi latérale s'étend en élévation d'un pied 60 vers un sommet 61. Le pied 60 est solidaire d'un socle 51 du bouchon 45. Le socle 51 peut prendre la forme d'un carter métallique ayant une face ouverte pour pouvoir être enfilée autour de la base 33. La première plaque et l'espace de mesure sont alors agencés dans ce carter du socle 51. Un connecteur avionique 36 solidaire de la base 33 peut toutefois saillir du carter.

Des moyens d'étanchéité peuvent de plus être agencés entre le carter et la base 33 pour rendre étanche l'espace de mesure 37.

De plus, le bouchon 45 schématisé comporte une paroi supérieure 62 obturant le sommet 61.

Dès lors, le bouchon 45 comprend des orifices 56 pour mettre en communication fluidique les sondes de température 31, 32 ainsi que l'espace ouvert 520 du condensateur avec un milieu extérieur EXT.

Ces orifices 56 sont ménagés dans au moins deux zones Z1, Z2 du bouchon 45 distinctes et décalées en élévation. Chaque zone comprend en outre favorablement et circonférentiellement une pluralité d'orifices 56

En particulier, au moins un orifice supérieur 57 est ménagé dans la paroi supérieure 62 et au moins un orifice inférieur 58 est ménagé dans la paroi latérale 59.

Le pied de la paroi latérale pouvant posséder un filetage sur sa face extérieure, chaque orifice extérieur peut être positionné à proximité immédiate du filetage, et notamment au plus près de ce filetage.

Par ailleurs, le détecteur d'immersion 20 est pourvu d'une unité de traitement 70 en communication avec la première unité de contrôle et de mesure 41 et la deuxième unité de contrôle et de mesure 53.

L'unité de traitement possède par exemple un processeur, un circuit intégré, un système programmable, un circuit logique, ces exemples ne limitant pas la portée de l'expression « unité de traitement ». L'unité de traitement peut être agencée dans l'espace de mesure 37.

Par exemple, une partie d'une carte électronique comporte un troisième circuit électronique matérialisant l'unité de traitement. Ce troisième circuit électronique est alors relié au premier circuit électronique et au deuxième circuit électronique.

Cette unité de traitement peut générer et émettre au moins un signal de sortie S1 S2 signalant une immersion du détecteur d'immersion 20 en présence de la première information d'immersion et de la deuxième information d'immersion.

En référence à la figure 4, l'unité de traitement 70 comporte un dispositif d'alimentation électrique 71 qui est relié à un circuit électrique 90.

Le dispositif d'alimentation électrique 71 comporte par exemple une carte électronique apte à convertir une tension électrique provenant du circuit électrique en une tension électrique présentant une tension électrique particulière. De plus, cette carte électronique peut posséder un module de filtrage usuel permettant de limiter les conséquences d'un impact de foudre ou d'agressions électromagnétiques sur le détecteur d'immersion.

De plus, l'unité de traitement 70 comporte un microcontrôleur 72. Ce microcontrôleur 72 est relié à la première unité de contrôle et de mesure 41 ainsi qu'à la deuxième unité de contrôle et de mesure 53 et au dispositif d'alimentation électrique 71.

Dès lors, le microcontrôleur alimente électriquement la première unité de contrôle et de mesure 41 ainsi que la deuxième unité de contrôle et de mesure 53 via des lignes d'alimentation L1, L2.

En outre, le microcontrôleur communique avec la première unité de contrôle et de mesure 41 et la deuxième unité de contrôle et de mesure 53. De manière usuelle, le microcontrôleur peut ainsi vérifier le bon fonctionnement du détecteur thermorésistif, et le bon fonctionnement du détecteur capacitif via des liaisons de contrôles L3, L4. Le microcontrôleur reçoit aussi des données provenant de la première unité de contrôle et de mesure 41 et de la deuxième unité de contrôle et de mesure 53 via des lignes de transmission L5, L6.

Par ailleurs, le microcontrôleur est lié à un connecteur 36 pour transmettre des données vers l'extérieur du détecteur d'immersion, par exemple vers un système de flottabilité et/ ou une balise de détresse et/ou un système de signalement d'alerte. Ce même connecteur 36 peut servir à relier le circuit électrique 90 au dispositif d'alimentation électrique 71.

Selon le procédé de l'invention, les sondes de température 31, 32 du détecteur thermorésistif sont alimentées électriquement par la première unité de contrôle et de mesure 41 par des courants électriquement différents. Les sondes de température présentent alors des températures différentes dues à leurs auto-échauffements hors conditions d'immersion. La première unité de contrôle et de mesure 41 n'envoie pas au microcontrôleur 72 la première information INF1 synonyme d'une présence de liquide.

De même, le condensateur 55 est alimenté électriquement par la deuxième unité de contrôle et de mesure 53. Le condensateur 55 présente alors une capacité électrique particulière hors conditions d'immersion. La deuxième unité de contrôle et de mesure n'envoie alors pas au microcontrôleur la deuxième information INF2 synonyme d'une présence de liquide.

Lorsque le détecteur d'immersion est immergé dans un liquide, ce liquide atteint l'espace interne 54 en traversant notamment les orifices du bouchon 45.

Dès lors, l'écart de températures entre les deux sondes de température se réduit en raison de l'inertie thermique du liquide. La première unité de contrôle et de mesure 41 génère une première information INF1 transmise au microcontrôleur.

Par exemple, la première unité de contrôle et de mesure 41 détermine un gradient qui est fonction de la variation d'un écart de températures entre les deux sondes de température 31, 32. Ce gradient est comparé à un seuil éventuellement déterminé à l'aide de la relation suivante :

$$GTH = C1*DT+C2$$

où « GTH » représente ledit seuil, « DT » représente la durée de mesure, « C1 » et « C2 » représentent des constantes prédéterminées, « * » représente le signe de la multiplication, « + » représente le signe de l'addition.

De plus, le seuil peut être borné.

La première information INF1 d'immersion est alors émise lorsque le gradient est supérieur au seuil.

De même, le liquide pénètre dans l'espace ouvert 520 et modifie la capacité électrique du condensateur du détecteur capacitif. Par suite, la deuxième unité de contrôle et de mesure 53 génère une deuxième information INF2 d'immersion transmise au microcontrôleur.

Lorsque le microcontrôleur reçoit la première information et la deuxième information concomitamment, le microcontrôleur génère et émet au moins un signal de sortie S1, S2 signalant une immersion du détecteur d'immersion.

Deux signaux de sortie S1, S2 sont par exemple transmis à l'extérieur du détecteur d'immersion via deux sorties 91, 92.

Par ailleurs, le microcontrôleur peut contrôler les sondes de température et le condensateur, et donc émettre un signal de panne S3 via une sortie 93.

Les diverses sorties peuvent prendre la forme d'éléments du connecteur avionique 36.

Par ailleurs, le détecteur d'immersion peut posséder un organe supplémentaire pour minimiser l'impact d'un flux d'air sur le fonctionnement de ce détecteur d'immersion.

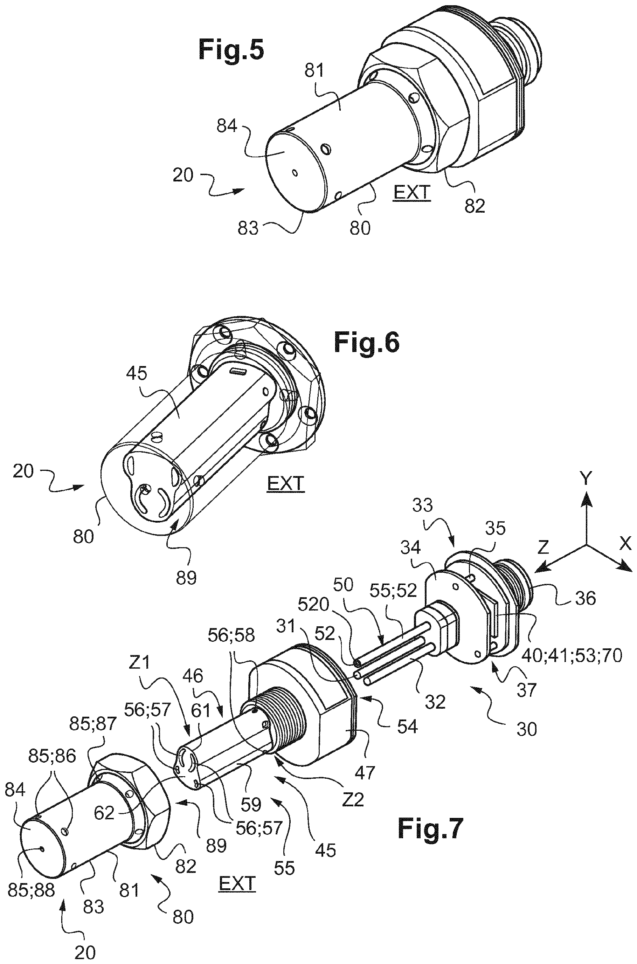

Les figures 5 à 7 illustrent alors un détecteur d'immersion pourvu d'un capuchon 80 pour remplir cette fonction.

En particulier, la figure 5 présente un capuchon 80 vissé sur le bouchon 45. Sur la figure 6, le capuchon est rendu transparent pour laisser apparaître le bouchon 45.

Enfin, la figure 7 présente une vue éclatée du détecteur d'immersion 20 muni d'un capuchon 80.

En référence à cette figure 7, ce capuchon 80 entoure au moins partiellement le bouchon 45.

Ainsi, le capuchon 80 comporte une cloison latérale 81 délimitant latéralement un volume interne 89. Cette cloison latérale peut comprendre une surface fermée sur elle-même, et peut notamment être une cloison latérale cylindrique. Le terme cylindrique indique que la paroi latérale peut être obtenue à l'aide d'une génératrice déplacée sur une ligne fermée.

Cette cloison latérale s'étend en élévation d'une assise 82 vers une tête 83. L'assise 82 peut prendre la forme d'un écrou pouvant être vissé au filetage du bouchon 45.

De plus, le capuchon 80 comprend une cloison supérieure 84 qui obture la tête 83.

Dès lors, le capuchon est vissé au bouchon 45, cette armature métallique étant agencée dans le volume interne 89.

Pour permettre à un liquide d'atteindre l'espace interne 54, au moins une ouverture 85 est ménagée dans le capuchon.

Par exemple, au moins une ouverture supérieure 88 est ménagée dans la cloison supérieure 84, et au moins une ouverture latérale 86, 87 est ménagée dans la cloison latérale 81. A l'instar du bouchon, la cloison latérale peut notamment comprendre au moins une ouverture latérale inférieure 87 et au moins une ouverture latérale supérieure 86.

Eventuellement, aucune ouverture du capuchon 80 ne débouche sur un orifice de l'armature métallique.

## Revendications

1. Détecteur d'immersion (20) muni d'un détecteur thermorésistif (30) comprenant au moins deux sondes de température (31, 32) saillant d'une base en s'étendant en élévation le long d'une direction en élévation (Z), ledit détecteur thermorésistif (30) comprenant une première unité de contrôle et de mesure (41) reliée à chaque sonde de température (31, 32), la première unité de contrôle et de mesure (41) étant adaptée pour générer en fonction d'une température de chaque sonde de température (31, 32) une première information (INF1) d'immersion lorsque ledit détecteur thermorésistif (30) est immergé dans un fluide,
**caractérisé en ce que** ledit détecteur d'immersion (20) comporte un détecteur capacitif (50), ledit détecteur capacitif (50) ayant un condensateur (55) électrique muni d'au moins une armature métallique (52) saillant de ladite base en s'étendant en élévation, ledit détecteur capacitif (50) ayant une deuxième unité de contrôle et de mesure (53) reliée au condensateur, la deuxième unité de contrôle et de mesure (53) étant adaptée pour générer en fonction d'une capacité électrique dudit condensateur (55) une deuxième information (INF2) d'immersion lorsque ledit détecteur capacitif (50) est immergé dans ledit fluide, ledit détecteur d'immersion (20) ayant une unité de traitement (70) en communication avec la première unité de contrôle et de mesure (41) et la deuxième unité de contrôle et de mesure (53) pour générer et émettre un signal de sortie (S1) signalant une immersion dudit détecteur d'immersion (20) en présence de la première information (INF1) d'immersion et de la deuxième information (INF2) d'immersion, ledit détecteur d'immersion ayant un bouchon (45) entourant lesdites sondes de température (31, 32) et ledit condensateur (55), ledit bouchon (45) comprenant des orifices (56) mettant en communication fluidique lesdites sondes de température (31, 32) et ledit condensateur (55) avec un milieu extérieur (EXT) enveloppant ledit détecteur d'immersion (20).

2. Détecteur d'immersion selon la revendication 1, **caractérisé en ce que** ladite première unité de contrôle et de mesure (41) est adaptée pour déterminer un gradient qui est fonction de la variation d'un écart de températures entre les deux sondes de température (31, 32) pendant une durée de mesure et compare ledit gradient à un seuil, ladite première information (INF1) d'immersion étant émise lorsque ledit gradient est supérieur au seuil.

3. Détecteur d'immersion selon la revendication 2, **caractérisé en ce que** ledit seuil est déterminé à l'aide de la relation suivante :

$$GTH = C1*DT+C2$$

où « GTH » représente ledit seuil, « DT » représente ladite durée de mesure, « C1 » et « C2 » représentent des constantes prédéterminées, « * » représente le signe de la multiplication, « + » représente le signe de l'addition.

4. Détecteur d'immersion selon l'une quelconque des revendications 1 à 3,
**caractérisé en ce que** ladite base (33) loge ladite première unité de contrôle et de mesure (41).

5. Détecteur d'immersion selon la revendication 4, **caractérisé en ce que** ladite base (33) loge ladite unité de traitement (70).

6. Détecteur d'immersion selon l'une quelconque des revendications 1 à 5,
**caractérisé en ce que** ladite unité de traitement (70) comporte un dispositif d'alimentation électrique (71) et un microcontrôleur (72), ledit dispositif d'alimentation électrique (71) étant destiné à être relié à un circuit électrique (90) extérieur au détecteur d'immersion, ledit microcontrôleur (72) étant relié à la première unité de contrôle et de mesure (41) et à la deuxième unité de contrôle et de mesure (53).

7. Détecteur d'immersion selon l'une quelconque des revendications 1 à 6,
**caractérisé en ce que** lesdits orifices (56) sont ménagés dans au moins deux zones (Z1, Z2) du bouchon (45) distinctes et décalées en élévation.

8. Détecteur d'immersion selon l'une quelconque des revendications 1 à 7,
**caractérisé en ce que** ledit bouchon (45) comporte une paroi latérale (59) délimitant latéralement un espace interne (54) en s'étendant en élévation d'un pied (60) vers un sommet (61), ledit bouchon (45) comportant une paroi supérieure (62) obturant ledit sommet (61), lesdites sondes de température (31, 32) et ledit condensateur étant au moins partiellement agencés dans ledit espace interne (54).

9. Détecteur d'immersion selon la revendication 8, **caractérisé en ce qu'**au moins un orifice supérieur (57) est ménagé dans ladite paroi supérieure (62) et au moins un orifice inférieur (58) est ménagé dans ladite paroi latérale (59).

10. Détecteur d'immersion selon l'une quelconque des revendications 1 à 9,
**caractérisé en ce que** ledit bouchon (45) entoure au moins partiellement ladite base.

11. Détecteur d'immersion selon l'une quelconque des revendications 1 à 10,
**caractérisé en ce que** ledit détecteur d'immersion (20) comporte un capuchon (80) entourant au moins partiellement ledit bouchon (45), ledit capuchon (80) comportant une cloison latérale (81) délimitant latéralement un volume (89) interne en s'étendant en élévation d'une assise (82) vers une tête (83), ledit capuchon (80) ayant une cloison supérieure (84) obturant ladite tête (83), ledit bouchon (45) étant au moins partiellement agencé dans ledit volume (89).

12. Détecteur d'immersion selon la revendication 11, **caractérisé en ce que** ladite assise (82) est vissée à un pied (60) du bouchon (45).

13. Détecteur d'immersion selon l'une quelconque des revendications 11 à 12,
**caractérisé en ce qu'**au moins une ouverture supérieure (85,88) est ménagée dans la cloison supérieure (84), et au moins une ouverture latérale (85, 86, 87) est ménagée dans la cloison latérale (81).

14. Détecteur d'immersion selon la revendication 13, **caractérisé en ce qu'**aucune ouverture du capuchon (80) ne débouche sur un orifice du bouchon (45).

15. Aéronef (1),
**caractérisé en ce que** ledit aéronef (1) est muni d'au moins un détecteur d'immersion (20) selon l'une quelconque des revendications 1 à 14.

16. Aéronef selon la revendication 15,
**caractérisé en ce que** ledit aéronef (1) est muni d'un unique détecteur d'immersion (20) selon l'une quelconque des revendications 1 à 14.

17. Aéronef selon la revendication 15,
**caractérisé en ce que** ledit aéronef s'étendant transversalement d'un coté droit vers un coté gauche de part et d'autre d'un plan antéropostérieur de symétrie, ledit aéronef s'étendant longitudinalement d'un coté avant vers un coté arrière de part et d'autre d'un plan médian de symétrie orthogonal au plan antéropostérieur, ledit aéronef (1) est muni d'au moins deux détecteurs d'immersion (20) selon l'une quelconque des revendications 1 à 14 disposés respectivement du coté avant et du coté arrière de l'aéronef ou du coté gauche et du coté droit de l'aéronef.

18. Procédé de détection d'immersion avec un détecteur d'immersion (20) selon l'une quelconque des revendications 1 à 14, au cours duquel :

- la première unité de contrôle et de mesure (41) génère une première information (INF1) d'immersion lorsque ledit détecteur thermorésistif (30) est immergé dans un fluide en fonction d'une température de chaque sonde de température (31, 32),
- la deuxième unité de contrôle et de mesure (53) génère une deuxième information (INF2) d'immersion lorsque ledit détecteur capacitif (50) est immergé dans ledit fluide en fonction d'une capacité électrique dudit condensateur (55),
- l'unité de traitement (70) génère et émet un signal de sortie (S1) signalant une immersion dudit détecteur d'immersion (20) en présence de la première information (INF1) d'immersion et de la deuxième information (INF2) d'immersion.

19. Procédé selon la revendication 18,
**caractérisé en ce que** ladite première unité de contrôle et de mesure (41) détermine un gradient qui est fonction de la variation d'un écart de températures entre les deux sondes de température (31, 32) pendant une durée de mesure, et compare ledit gradient à un seuil, ladite première information (INF1) d'immersion étant émise lorsque ledit gradient est supérieur au seuil.

20. Procédé selon la revendication 18,
**caractérisé en ce que** ledit seuil est déterminé à l'aide de la relation suivante :

$$GTH = C1*DT+C2$$

où « GTH » représente ledit seuil, « DT » représente ladite durée de mesure, « C1 » et « C2 » représentent des constantes prédéterminées, « * » représente le signe de la multiplication, « + » représente le signe de l'addition.

**Patentansprüche**

1. Eintauchdetektor (20) mit einem Thermowiderstandsdetektor (30), der mindestens zwei Temperatursonden (31, 32) aufweist, die gegenüber einer Basis vorstehen, indem sie sich nach oben entlang einer Höhenrichtung (Z) erstrecken, wobei der Thermowiderstandsdetektor (30) eine erste Überwachungs- und Messeinheit (41) aufweist, die mit jeder Temperatursonde (31, 32) verbunden ist, wobei die erste Überwachungs- und Messeinheit (41) ausgebildet ist, um in Abhängigkeit von einer Temperatur einer jeden Temperatursonde (31, 32) eine erste Eintauchinformation (INF1) zu erzeugen, wenn der Thermowiderstandsdetektor (30) in ein Fluid eingetaucht ist,
**dadurch gekennzeichnet, dass** der Eintauchdetektor (20) einen kapazitiven Detektor (50) aufweist, wobei der kapazitive Detektor (50) einen elektrischen Kondensator (55) aufweist mit mindestens einer Metallarmierung (52), die gegenüber der Basis nach oben vorsteht, wobei der kapazitive Detektor (50) eine zweite Überwachungs- und Messeinheit (53) aufweist, die mit dem Kondensator verbunden ist, wobei die zweite Überwachungs- und Messeinheit (53) ausgebildet ist, um in Abhängigkeit von einer elektrischen Kapazität des Kondensators (55) eine zweite Eintauchinformation (INF2) zu erzeugen, wenn der kapazitive Detektor (50) in das Fluid eingetaucht ist, wobei der Eintauchdetektor (20) eine Verarbeitungseinheit (70) aufweist, die in Verbindung mit der ersten Überwachungs- und Messeinheit (41) und der zweiten Überwachungs- und Messeinheit (53) steht, um ein Ausgangssignal (S1) zu erzeugen und auszusenden, das ein Eintauchen des Eintauchdetektors (20) anzeigt in Anwesenheit der ersten Eintauchinformation (INF1) und der zweiten Eintauchinformation (INF2), wobei der Eintauchdetektor eine Kappe (45) aufweist, die die Temperatursonden (31, 32) und den Kondensator (55) umgibt, wobei die Kappe (45) Öffnungen (56) aufweist, die die Temperatursonden (31, 32) und den Kondensator (55) mit der äußeren Umgebung (EXT), die den Eintauchdetektor (20) umgibt, fluidisch verbinden.

2. Eintauchdetektor nach Anspruch 1,
**dadurch gekennzeichnet, dass** die erste Überwachungs- und Messeinheit (41) ausgebildet ist, um während einer Messzeitdauer einen Gradienten zu bestimmen, der abhängig von der Änderung eines Temperaturunterschieds zwischen den beiden Temperatursonden (31, 32) ist, und den Gradienten mit einem Schwellenwert vergleicht, wobei die erste Eintauchinformation (INF1) ausgesendet wird, wenn der Gradient größer als der Schwellenwert ist.

3. Eintauchdetektor nach Anspruch 2,
**dadurch gekennzeichnet, dass** der Schwellenwert mit Hilfe der folgenden Gleichung bestimmt wird:

$$GTH = C1*DT+C2 \ ,$$

wobei "GTH" den Schwellenwert bezeichnet, "DT" die Messzeitdauer bezeichnet, "C1" und "C2" vorbestimmte Konstanten bezeichnen, "*" das Multiplikationszeichen ist, und "+" das Additionszeichen ist.

4. Eintauchdetektor nach einem der Ansprüche 1 bis 3, **dadurch gekennzeichnet, dass** die Basis (33) die erste Überwachungs- und Messeinheit (41) aufnimmt.

5. Eintauchdetektor nach Anspruch 4, **dadurch gekennzeichnet, dass** die Basis (33) die Verarbeitungseinheit (70) aufnimmt.

6. Eintauchdetektor nach einem der Ansprüche 1 bis 5, **dadurch gekennzeichnet, dass** die Verarbeitungseinheit (70) eine elektrische Stromversorgungsvorrichtung (71) und einen Mikrocontroller (72) aufweist, wobei die elektrische Stromversorgungsvorrichtung (71) dazu bestimmt ist, mit einem elektrischen Schaltkreis (90) außerhalb des Eintauchdetektors verbunden zu werden, wobei der Mikrocontroller (72) mit der ersten Überwachungs- und Messeinheit (41) und mit der zweiten Überwachungs- und Messeinheit (53) verbunden ist.

7. Eintauchdetektor nach einem der Ansprüche 1 bis 6, **dadurch gekennzeichnet, dass** die Öffnungen (56) in mindestens zwei unterschiedlichen und in Höhenrichtung versetzten Bereichen (Z1, Z2) der Kappe (45) angeordnet sind.

8. Eintauchdetektor nach einem der Ansprüche 1 bis 7, **dadurch gekennzeichnet, dass** die Kappe (45) eine Seitenwand (59) aufweist, die seitlich einen Innenraum (54) eingrenzt, indem sie sich in Höhenrichtung von einem Fuß (60) zu einer Spitze (61) erstreckt, wobei die Kappe (45) eine obere Wandung (62) aufweist, die die Spitze (61) abschließt, wobei die Temperatursonden (31, 32) und der Kondensator mindestens teilweise in dem Innenraum (54) angeordnet sind.

9. Eintauchdetektor nach Anspruch 8, **dadurch gekennzeichnet, dass** mindestens eine obere Öffnung (57) in der oberen Wandung (62) und mindestens eine untere Öffnung (58) in der Seitenwand (59) angeordnet sind.

10. Eintauchdetektor nach einem der Ansprüche 1 bis 9, **dadurch gekennzeichnet, dass** die Kappe (45) mindestens teilweise die Basis umgibt.

11. Eintauchdetektor nach einem der Ansprüche 1 bis 10, **dadurch gekennzeichnet, dass** der Eintauchdetektor (20) eine Schutzhaube (80) aufweist, die zumindest teilweise die Kappe (45) umgibt, wobei die Schutzhaube (80) eine Seitenwand (81) aufweist, die seitlich ein Innenvolumen (89) eingrenzt, indem sie sich in Höhenrichtung von einer Grundplatte (82) bis zu einem Kopf (83) erstreckt, wobei die Schutzhaube (80) eine obere Wandung (84) aufweist, die den Kopf (83) verschließt, wobei die Kappe (45) mindestens teilweise in diesem Volumen (89) angeordnet ist.

12. Eintauchdetektor nach Anspruch 11, **dadurch gekennzeichnet, dass** die Grundplatte (82) an einen Fuß (60) der Kappe (45) geschraubt ist.

13. Eintauchdetektor nach einem der Ansprüche 11 bis 12, **dadurch gekennzeichnet, dass** mindestens eine obere Öffnung (85, 88) in der oberen Wand (84) angeordnet ist, und mindestens eine seitliche Öffnung (85, 86, 87) in der Seitenwand (81) angeordnet ist.

14. Eintauchdetektor nach Anspruch 13, **dadurch gekennzeichnet, dass** keine Öffnung der Schutzhaube (80) auf einer Öffnung der Kappe (45) mündet.

15. Luftfahrzeug (1), **dadurch gekennzeichnet, dass** das Luftfahrzeug (1) mit mindestens einem Eintauchdetektor (20) nach einem der Ansprüche 1 bis 14 ausgerüstet ist.

16. Luftfahrzeug nach Anspruch 15, **dadurch gekennzeichnet, dass** das Luftfahrzeug (1) mit einem einzigen Eintauchdetektor (20) nach einem der Ansprüche 1 bis 14 ausgerüstet ist.

17. Luftfahrzeug nach Anspruch 15, **dadurch gekennzeichnet, dass** das Luftfahrzeug sich in Querrichtung von einer rechten Seite zu einer linken Seite zu beiden Seiten einer antero-posterioren Symmetrieebene erstreckt, wobei das Luftfahrzeug sich in Längsrichtung von einem Vorderteil bis zu einem hinteren Teil zu beiden Seiten einer Symmetrie-Mittelebene erstreckt, die senkrecht zu der antero-posterioren Ebene verläuft, wobei das Luftfahrzeug (1) mit mindestens zwei Eintauchdetektoren (20) nach einem der Ansprüche 1 bis 14 ausgerüstet ist, die jeweils am Vorderteil und am hinteren Teil des Luftfahrzeugs oder auf der linken Seite und der rechten Seite des Luftfahrzeugs angeordnet sind.

18. Verfahren zur Erfassung eines Eintauchens mit einem Eintauchdetektor (20) nach einem der Ansprüche 1 bis 14, bei dem:

- die erste Überwachungs- und Messeinheit (41) eine erste Eintauchinformation (INF1) erzeugt, wenn der Thermowiderstandsdetektor (30) in ein Fluid eingetaucht ist, in Abhängigkeit von einer Temperatur einer jeden Temperatursonde (31, 32),
- die zweite Überwachungs- und Messeinheit (53) eine zweite Eintauchinformation (INF2) erzeugt, wenn der kapazitive Detektor (50) in das Fluid eingetaucht ist in Abhängigkeit von einer elektrischen Kapazität des Kondensators (55),
- die Verarbeitungseinheit (70) ein Ausgangssignal (S1) erzeugt und aussendet, das ein Eintauchen des Eintauchdetektors (20) bei Anwesenheit der ersten Eintauchinformation (INF1) und der zweiten Eintauchinformation (INF2) signalisiert.

19. Verfahren nach Anspruch 18, **dadurch gekennzeichnet, dass** die erste Überwachungs- und Messeinheit (41) während einer Messzeitdauer einen Gradienten bestimmt, der von der Änderung eines Temperaturunterschiedes zwischen den beiden Temperatursonden (31, 32) abhängt, und den Gradienten mit einem Schwellenwert vergleicht, wobei die erste Eintauchinformation (INF1) ausgesendet wird, wenn der Gradient größer als der Schwellenwert ist.

20. Verfahren nach Anspruch 18, **dadurch gekennzeichnet, dass** der Schwellenwert mit Hilfe der folgenden Gleichung bestimmt wird:

$$GTH = C1*DT+C2 \, ,$$

wobei "GTH" den Schwellenwert bezeichnet, "DT" die Messzeitdauer bezeichnet, "C1" und "C2" vorbestimmte Konstanten bezeichnen, "*" das Multiplikationszeichen ist, und "+" das Additionszeichen ist.

**Claims**

1. Immersion detector (20) equipped with a thermoresistive sensor (30) comprising at least two temperature probes (31, 32) protruding from a base while extending in elevation along an elevation direction (Z), said thermoresistive sensor (30) comprising a first control and measurement unit (41) connected to each temperature probe (31, 32), the first control and measurement unit (41) being adapted to generate, as a function of a temperature of each temperature probe (31, 32), a first immersion information item (INF1) when said thermoresistive sensor (30) is immersed in a fluid, **characterized in that** said immersion detector (20) comprises a capacitive sensor (50), said capacitive sensor (50) having an electrical capacitor (55) equipped with at least one metal armature (52) protruding from said base while extending in elevation, said capacitive sensor (50) having a second control and measurement unit (53) connected to the capacitor, the second control and measurement unit (53) being adapted to generate, as a function of an electrical capacitance of said capacitor (55), a second immersion information item (INF2) when said capacitive sensor (50) is immersed in said fluid, said immersion detector (20) having a processing unit (70) in communication with the first control and measurement unit (41) and the second control and measurement unit (53) in order to generate and emit an output signal (S1) indicating an immersion of said immersion detector (20) in the presence of the first immersion information item (INF1) and the second immersion information item (INF2), said immersion detector having a cap (45) surrounding said temperature probes (31, 32) and said capacitor (55), said cap (45) comprising orifices (56) which place said temperature probes (31, 32) and said capacitor (55) in fluidic communication with an external medium (EXT) surrounding said immersion detector (20).

2. Immersion detector according to claim 1, **characterized in that** said first control and measurement unit (41) is adapted to determine a gradient which is a function of the change in a temperature difference between the two temperature probes (31, 32) during a measurement duration and compares said gradient with a threshold, said first immersion information item (INF1) being emitted when said gradient is greater than the threshold.

3. Immersion detector according to claim 2, **characterized in that** said threshold is determined using the following relationship:

$$GTH = C1*DT+C2$$

where "GTH" denotes said threshold, "DT" denotes said measurement duration, "C1" and "C2" denote predetermined constants, "*" denotes the multiplication sign, and "+" denotes the addition sign.

4. Immersion detector according to any one of claims 1 to 3, **characterized in that** said base (33) houses said first control and measurement unit (41).

5. Immersion detector according to claim 4, **characterized in that** said base (33) houses said processing unit (70).

**6.** Immersion detector according to any one of claims 1 to 5, **characterized in that** said processing unit (70) comprises a power supply device (71) and a microcontroller (72), said power supply device (71) being intended to be connected to an electrical circuit (90) external to the immersion detector, said microcontroller (72) being connected to the first control and measurement unit (41) and to the second control and measurement unit (53).

**7.** Immersion detector according to any one of claims 1 to 6, **characterized in that** said orifices (56) are formed in at least two distinct zones (Z1, Z2) of the cap (45) which are offset in elevation.

**8.** Immersion detector according to any one of claims 1 to 7, **characterized in that** said cap (45) comprises a side wall (59) which laterally delimits an internal space (54) while extending in elevation from a foot (60) to a tip (61), said cap (45) comprising a top wall (62) which closes off said tip (61), said temperature probes (31, 32) and said capacitor being at least partially arranged in said internal space (54).

**9.** Immersion detector according to claim 8, **characterized in that** at least one upper orifice (57) is formed in said top wall (62) and at least one lower orifice (58) is formed in said side wall (59).

**10.** Immersion detector according to any one of claims 1 to 9, **characterized in that** said cap (45) at least partially surrounds said base.

**11.** Immersion detector according to any one of claims 1 to 10, **characterized in that** said immersion detector (20) comprises a cover (80) which at least partially surrounds said cap (45), said cover (80) comprising a side partition (81) which laterally delimits an internal volume (89) while extending in elevation from a pedestal (82) to a head (83), said cover (80) having a top partition (84) which closes off said head (83), said cap (45) being at least partially arranged in said volume (89).

**12.** Immersion detector according to claim 11, **characterized in that** said pedestal (82) is screwed to a foot (60) of the cap (45).

**13.** Immersion detector according to any one of claims 11 to 12, **characterized in that** at least one upper opening (85, 88) is formed in the top partition (84) and at least one side opening (85, 86, 87) is formed in the side partition (81).

**14.** Immersion detector according to claim 13, **characterized in that** no opening of the cover (80) opens onto an orifice of the cap (45).

**15.** Aircraft (1), **characterized in that** said aircraft (1) is equipped with at least one immersion detector (20) according to any one of claims 1 to 14.

**16.** Aircraft according to claim 15, **characterized in that** said aircraft (1) is equipped with a single immersion detector (20) according to any one of claims 1 to 14.

**17.** Aircraft according to claim 15, **characterized in that** said aircraft extends transversely from a right side to a left side on either side of an anteroposterior plane of symmetry, said aircraft extends longitudinally from a front side to a rear side on either side of a median plane of symmetry that is orthogonal to the anteroposterior plane, and said aircraft (1) is equipped with at least two immersion detectors (20) according to any one of claims 1 to 14 disposed respectively on the front side and on the rear side of the aircraft or on the left side and on the right side of the aircraft.

**18.** Method for immersion detection using an immersion detector (20) according to any one of claims 1 to 14, during which:

- the first control and measurement unit (41) generates a first immersion information item (INF1) when said thermoresistive sensor (30) is immersed in a fluid, as a function of a temperature of each temperature probe (31, 32),
- the second control and measurement unit (53) generates a second immersion information item (INF2) when said capacitive sensor (50) is immersed in said fluid, as a function of an electrical capacitance of said capacitor (55),
- the processing unit (70) generates and emits an output signal (S1) indicating an immersion of said immersion detector (20) in the presence of the first immersion information item (INF1) and the second immersion information item (INF2).

**19.** Method according to claim 18, **characterized in that** said first control and measurement unit (41) determines a gradient which is a function of the change in a temperature difference between the two temperature probes (31, 32) during a measurement duration and compares said gradient with a threshold, said first immersion information item (INF1) being emitted when said gradient is greater than the threshold.

**20.** Method according to claim 18, **characterized in that** said threshold is determined using the following relationship:

$$GTH = C1*DT+C2$$

where "GTH" denotes said threshold, "DT" denotes said measurement duration, "C1" and "C2" denote predetermined constants, "*" denotes the multiplication sign, and "+" denotes the addition sign.

**Fig.1**

9

8

5

1

4

2

6

11

12    20    10

101    7

P1

P2

**Fig.2**

20

56;58

53

61

Z1

56;57

62    45    Z2    EXT    60    36

# Fig.3

EXT

# Fig.4

# Fig.5

# Fig.6

# Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2580070
- US 6078729 A
- US 5201223 A
- EP 2733066 A
- US 2011110792 A
- DE 102008044232